(19) Europäisches Patentamt
European Patent Office
Office européen des brevets

(11) Publication number: **0 622 414 A1**

(12) **EUROPEAN PATENT APPLICATION published in accordance with Art. 158(3) EPC**

(21) Application number: **93924800.1**

(22) Date of filing: **10.11.93**

(86) International application number: **PCT/JP93/01635**

(87) International publication number: **WO 94/11439 (26.05.94 94/12)**

(51) Int. Cl.5: **C08L 67/02**, C08K 5/5317, C08K 5/5333

(30) Priority: **10.11.92 JP 299797/92**

(43) Date of publication of application: **02.11.94 Bulletin 94/44**

(84) Designated Contracting States: **DE FR GB**

(71) Applicant: **TEIJIN LIMITED**
**6-7, Minamihonmachi 1-chome**
**Chuo-ku**
**Osaka-shi Osaka 541 (JP)**

(72) Inventor: **YOSHIMURA, Mie**
**3-9-133, Minohara**
**Ibaraki-shi, Osaka 567 (JP)**
Inventor: **OGAWA, Yoshinari**
**4-11-5, Namiki**
**Sagamihara-shi, Kanagawa 229 (JP)**
Inventor: **SHIMOTSUMA, Sakae**
**124-60, Tomuro**
**Atsugi-shi, Kanagawa 243 (JP)**

(74) Representative: **Votier, Sidney David et al**
**CARPMAELS & RANSFORD**
**43, Bloomsbury Square**
**London WC1A 2RA (GB)**

(54) **FLAME-RETARDANT POLYESTER RESIN COMPOSITION.**

(57) A composition mainly comprising polybutylene terephthalate, and also containing a halobenzyl acrylate resin having repeated halobenzyl acrylate or methacrylate units and phosphonic acid or a monoester thereof. The composition may further contain a polytetrafluoroethylene resin, an ethylene copolymer and an inorganic filler as optional components. The composition is capable of a reduction in the amount of volatile decomposition gas generated in the melt molding step and an improvement in the fluidity, thus shortening the cycle of producing molded articles.

EP 0 622 414 A1

TECHNICAL FIELD

The present invention relates to a flame-retardant polyester resin composition. More specifically, it relates to a flame-retardant polyester resin composition from which very little volatiles to contaminate metals are generated and which is excellent in moldability (flowability, rigidity at high-temperature, high-cycle molding).

PRIOR ART

Japanese Laid-open Patent Publication No. 3682/1977 discloses a process for producing a flame-retardant polyester resin, which comprises incorporating a halogen-containing benzyl acrylate or benzyl methacrylate polymer into a polyester resin.

Japanese Laid-open Patent Publication No. 6248/1984 discloses a polyester resin composition containing a thermoplastic polyester resin, a halogen-containing acrylic resin obtained by the polymerization of a halogen-containing benzyl acrylate or methacrylate of the following formula (1),

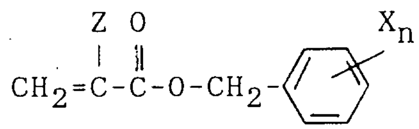

wherein X is a halogen atom, n is an integer of 1 to 5 and Z is a hydrogen atom or a methyl group, and a hindered phenol compound.

Japanese Laid-open Patent Publication No. 20350/1984 discloses a polyester resin composition obtained by incorporating the same halogen-containing acrylic resin as the above halogen-containing acrylic resin and a thioether compound into a thermoplastic polyester resin.

Further, Japanese Laid-open Patent Publication No. 20351/1984 discloses a polyester resin composition which is the same as the composition disclosed in above Japanese Laid-open Patent Publication No. 20350/1984 except that the thioether is replaced with at least one selected from the group consisting of phosphoric acid metal salt, phosphorous acid metal salt, hypophosphorous acid metal salt and organic phosphorous acid ester.

The above Japanese Laid-open Patent Publications describe that the above polyester resin compositions respectively improve the tensile elongation and folding endurance of a polyester resin.

However, the above hindered phenol compound, thioether compound and phosphorus compounds are all volatile per se, and it is known that in a point where these compounds contact the metal, phosphorus-containing compounds, for example, are greatly highly corrosive to a metal. These compositions hence cannot be said to be satisfactory as base materials for a relay and a switch of electric parts obtained by assembling parts prepared therefrom.

For deceasing the volatiles in melt-molding for a molded article, it is important to decrease volatiles derived from a polybutylene terephthalate base material, and it is also important to decrease volatiles of various additives to be added to the base material. It is possible to decrease volatiles derived from additives, or to bring the content of such volatiles to zero, by carefully selecting components (materials) therefor. However, it is the most important how to decrease volatiles derived from a polybutylene terephthalate base material per se, and yet prior art documents rarely mention any techniques for accomplishing the above.

Further, in view of an improvement in production efficiency, it is recently desired to accomplish a shortened molding cycle (i.e., high-cycle properties). Conventionally, a nucleating agent for a thermoplastic polyester has been expected to a great extent to accomplish the high-cycle properties. When this means is used, the cycle can be highly probably shortened due to the crystallization-promoting effect of the nucleating agent, while the solidification rate in a mold increases, and as a result, the flowability decreases. When an attempt is therefore made to increase the injection rate and pressure, it is undeniable to cause a new possible problem in that a molded article has burrs.

As described above, part of the problems could be solved, while new problems occurred, and it has been difficult to obtain a flame-retardant polyester resin composition which can overcome all the problems present in achieving the high degree of precision, and decreasing the size of, electric and electronic parts and automobile parts for which it is used as a raw material.

DISCLOSURE OF THE INVENTION

It is an object of the present invention to provide a flame-retardant polyester resin composition.

It is another object of the present invention to provide a flame-retardant polyester resin composition from which very little volatiles are generated and which is excellent in moldability typified by flowability, high-temperature rigidity and high-cycle properties.

Other objects and advantages of the present invention will be apparent from the following description.

According to the present invention, the above objects and advantages of the present invention will be achieved, first, by a flame-retardant polyester resin composition comprising

(a) a polybutylene terephthalate or a copolyester containing at least 60 % by weight of butylene terephthalate unit,

(b) a halobenzyl acrylic resin which is a polymer of a halobenzyl (meth)acrylate of the formula (1),

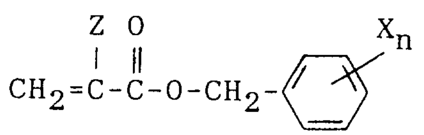

(1)

wherein X is a halogen atom, n is an integer of 1 to 5 and Z is a hydrogen atom or a methyl group, and

(c) at least one compound selected from the group consisting of phosphonic acid and phosphonic acid monoester,

the flame-retardant polyester resin composition containing, on the basis of a total weight of the above components (a), (b) and (c), 2 to 25 % by weight of the component (b) and not more than 1 % by weight of the component (c).

BRIEF DESCRIPTION OF DRAWINGS

Fig. 1 shows schematic views of a sample obtained for measuring the flowability of a flame-retardant polyester resin composition of the present invention.

The present invention will be detailed hereinafter.

The polyester component (a) used in the present invention is a polybutylene terephthalate or a copolyester containing at least 60 % by weight of butylene terephthalate unit.

The polybutylene terephthalate is obtained by the polycondensation of 1,4-butanediol and either terephthalic acid or a low alcohol ester thereof. Examples of the monomer to be copolymerized for obtaining the copolymer containing at least 60 % by weight of butylene terephthalate unit include aliphatic and aromatic polybasic acids such as isophthalic acid, naphthalene dicarboxylic acid, adipic acid, sebacic acid, trimellitic acid and succinic acid or ester-forming derivatives thereof, aromatic hydroxy carboxylic acids such as hydroxybenzoic acid and hydroxynaphtholc acid or ester-forming derivatives thereof, lower-alkylene glycols such as 1,3-propanediol, 1,6-hexanediol and 1,8-octanediol, aromatic alcohols such as bisphenol A and 4,4'-dihydroxybiphenyl, alcohol adducts of alkylene oxide such as an adduct of 2 mol ethylene oxide and 1 mol bisphenol A and an adduct of 2 mol propylene oxide and 1 mol bisphenol A, and polyhydroxy compounds such as glycerin and pentaerythritol or ester-forming derivatives thereof.

The halobenzyl acrylic resin as the component (b) is a polymer of the halobenzyl acrylate or halobenzyl methacrylate of the above formula (1). This polymer may be a homopolymer of halobenzyl (meth)acrylate or a copolymer of the halobenzyl (meth)acrylate and other vinyl monomer.

In the above formula (1) for halobenzyl (meth)acrylate, X is a halogen atom, n is an integer of 1 to 5 and Z is a hydrogen atom or a methyl group.

The halogen atom includes fluorine, chlorine, bromine and iodine. Of these, chlorine and bromine are preferred, and bromine is particularly preferred. n is preferably 3 to 5.

When Z is a hydrogen atom, the formula (1) represents halobenzyl acrylate. When Z is a methyl group, the formula (1) represents halobenzyl methacrylate.

Examples of the halobenzyl acrylate include pentabromobenzyl acrylate, tetrabromobenzyl acrylate, tribromobenzyl acrylate, pentachlorobenzyl acrylate, tetrachlorobenzyl acrylate, trichlorobenzyl acrylate and mixtures of these. The halobenzyl methacrylate includes those methacrylates corresponding to the above acrylates.

Examples of the other vinyl monomer used for the copolymerization with the halobenzyl (meth)acrylate include acrylic acid, acrylic acid esters such as methyl acrylate, ethyl acrylate, butyl acrylate and benzyl acrylate, methacrylic acid, methacrylic acid esters such as methyl methacrylate, ethyl methacrylate, butyl methacrylate and benzyl methacrylate, unsaturated carboxyllc acids such as styrene, acrylonitrile, fumaric acid and maleic acid or anhydrides thereof, vinyl acetate and vinyl chloride. Generally, these can be used in an amount equimolar to that of the halobenzyl (meth)acrylate or less, preferably in an amount of 0.5 mol or less, per mole of the halobenzyl (meth)acrylate.

A crosslinkable vinyl monomer may be also used as the other vinyl monomer. Examples of the crosslinkable monomer include xylene diacrylate, xylene dimethacrylate, tetrabromoxylene diacrylate, tetrabromoxylene dimethacrylate, butadiene, isoprene and divinylbenzene. Generally, these can be used in an amount which is not more than 0.5 times that of the halobenzyl (meth)acrylate.

As the halobenzyl acrylic resin, preferred is a halobenzyl acrylic resin having a polymerization degree of approximately 10 to 60 in view of extrudability and flowability.

The halogen content of the above halobenzyl acrylic resin is desirably at least 10 % by weight, preferably at least 30 % by weight, more preferably 50 to 70 % by weight.

Specific examples of the phosphonic acid or phosphonic acid monoester as the component (c) preferably include alkylphosphonic acid, phenylphosphonic acid, monoalkyl phosphonate and monophenyl phosphonate.

Concerning the amounts of the components (a), (b) and (c), on the basis of the total weight of these components, the amount of the halobenzyl acrylic resin as the component (b) is 2 to 25 % by weight, preferably 5 to 20 % by weight. When this amount is smaller than 2 % by weight, the composition to be obtained shows insufficient flame retardancy. When it exceeds 25 % by weight, undesirably, the flame retardant is poorly dispersed, the extrudability and moldability hence decrease, and a molded article to be obtained will show a decreased strength.

The amount of the phosphonic acid or phosphonic acid monoester as the component (C) on the basis of the same standard is 1 % by weight or less, preferably 0.01 to 0.3 % by weight. The phosphonic acid or phosphonic acid monoester works as follows. OH group coordinates to a Ti-containing catalyst as a polymerization catalyst for polybutylene terephthalate or an Sb compound as a flame retardant aid to inhibit an ester exchange reaction and inhibit the generation of tetrahydrofuran (THF) which is a main gas from the polybutylene terephthalate.

When the amount of the phosphonic acid or phosphonic acid monoester is too small, the generation of tetrahydrofuran is insufficiently inhibited. When it is large to excess, the composition is on an acid side, and an ester exchange reaction is caused by contraries.

The features of the present invention are brought by synergistic effects produced by the use of (a) the polyester, (b) the halobenzyl acrylic resin and (c) the phosphonic acid and/or phosphonic acid monoester in combination. When any one of these three components is not present or replaced with other substance, the effects of the present invention cannot be obtained.

That is, due to the use in combination of the halobenzyl acrylic resin (b) and the phosphonic acid and/or phosphonic acid ester (c) in the present invention, the polyester (a) is imparted with excellent flame retardancy and mechanical properties, and further, each component is decomposed and degraded to a less degree. Moreover, the heat stability of the polyester (a) itself is guaranteed.

Further, due to the use of the components (b) and (c) in combination, the component (c) contributes toward the inhibition effect of the halobenzyl acrylic resin on the crystallization of the polyester (a) to no small extent, and allows the composition to exhibit high rigidity at high temperatures, derived from the high softening point inherent to the halobenzyl acrylic resin, whereby the molding cycle can be shortened without imparing the flowability. These advantages are brought by the synergistic effect of (a), (b) and (c) used in the present invention. When, for example, the component (b) is replaced with a halogenated epoxy resin, such a high flowability as that in the present invention is not exhibited.

The composition of the present invention may further contain a polytetrafluoroethylene resin (d) in addition to the above components (a), (b) and (c). That is, in the present invention, it is not essential to incorporate the (d) polytetrafluoroethylene, but it is preferred to incorporate it for accomplishing further excellent flame retardancy, preventing dripping in combustion in particular, and for obtaining V-0 in flame retardancy classification according to UL Standard 94. This polytetrafluoroethylene (d) can be produced by a known method such as emulsion polymerization or suspension polymerization, and is widely commercially available.

The polytetrafluoroethylene (d) having a polymerization degree (viscosity) as required depending upon intended use can be selected for utilizing the dispersibility thereof, the processability of the composition and other physical properties. Further, it can have any form such as the forms of powder and particles and

the form of a fiber, and the particle diameter thereof can be adjusted to a wide range of from 0.05 $\mu$m to several mm. As to the form and particle diameter, suitable form and diameter can be selected by experiments depending upon the processability of the composition and intended properties and effects. In view of easiness in handling, workability and producibility in the step of preparing the composition, it is preferable that the polytetrafluoroethylene resin (d) has the form of granules having an average particle diameter of 20 to 800 $\mu$m, preferably 100 to 700 $\mu$m.

The polytetrafluoroethylene (d) is incorporated preferably in an amount of 0.01 to 5 % by weight on the basis of the total weight of the components (a), (b), (c) and (d).

The composition of the present invention may further contain an ethylene copolymer (e) in addition to the above components (a), (b) and (c) or in addition to the above components (a), (b), (c) and (d).

Examples of the ethylene copolymer used in the present invention include an ethylene-vinyl acetate copolymer, an ethylene-methyl methacrylate copolymer, an ethylene-ethyl acrylate copolymer, an ethylene-methyl acrylate copolymer, an ethylene-methyl acrylate-maleic anhydride terpolymer, an ethylene-acrylic acid copolymer, an ethylene-methacrylic acid copolymer, ionomer (product obtained by crosslinking an ethylene-methacrylic acid copolymer with metal ion) and a polyolefin-maleic anhydride graft copolymer.

The properties of the above ethylene copolymer are determined greatly depending upon the content of the comonomer to be copolymerized and the form of polymerization, and the ethylene copolymer has an advantage that a polymer which can impart the composition with desired features can be easily selected. The main properties of the ethylene copolymer are 1) flexibility at low temperatures, 2) softness without necessity of a plasticizer, 3) very high impact strength even at a low temperature, 4) excellent heat stability in processing, 5) high acceptability to a filler, 6) excellent resistance to cracking in bending and cracking in environmental stress, and 7) easiness in processing with a variety of machines for thermoplastic molding.

The amount of the ethylene copolymer (e) is preferably 0.1 to 10 % by weight on the basis of the total weight of (a), (b), (c) and (e) or the total weight of (a), (b), (c), (d) and (e). In particular, when the above amount is 1 to 5 % by weight, there is obtained a further excellent balance between the above effects in improvement and the high-cycle properties exhibited by the synergistic effect produced by the components (a), (b) and (c). Therefore, the amount of 1 to 5 % by weight is more preferable.

The composition of the present invention may further contain an inorganic filler (f).

Examples of the inorganic filler preferably include fibrous fillers such as a glass fiber and a carbon fiber and particulate fillers such as silica, alumina, silica alumina, glass beads, graphite, gypsum and clay.

The amount of the inorganic filler is preferably 50 % by weight or less, particularly preferably 40 % by weight or less, on the basis of the total weight of the components (a), (b), (c) and (f), the total amount of the component (a), (b), (c), (d) and (f) or the total amount of the components (a), (b), (c), (d), (e) and (f).

The composition of the present invention may further contain a flame-retardant aid. As the flame-retardant aid, it is preferred to use, for example, $Sb_2O_3$ and/or $xNa_2O \cdot Sb_2O_5 \cdot H_2O$ (x = 0 - 1, y = 0 - 4).

Due to the use of the flame-retardant aid, the composition can be further improved in flame retardancy. The flame-retardant aid preferably has a particle diameter of 0.02 to 5 $\mu$m.

The flame-retardant aid particularly has a great influence on the inhibition of the decomposition of organic compounds such as the polyester (a), the flame retardant (b) or a mold releasing agent. For preventing this decomposition and preventing the subsequent corrosion and contamination of a metal of a molded article as an electric part and corrosion and contamination of a mold, it is advantageous to use at least one of (1) antimony trioxide which shows a pH of 3 to 5 as a solution thereof in ethanol, (2) antimony pentaoxide which shows a pH of 3 to 6 as a solution thereof in ethanol and (3) antimony pentaoxide part of which is converted to Na salt so that it shows a pH of 6 to 8 as a solution thereof in ethanol. In particular, the (3) antimony pentaoxide is preferred. The pH as a solution in ethanol refers to a value obtained by adding 50 ml of ethanol to 1 g of a sample, decomposing and dissolving the sample and measuring a supernatant with a hydrogen ion concentration measuring device at room temperature. When the above pH value is low, the polyester (a) and the flame retardant (b) are liable to be decomposed. When it is too high, the decomposition is also promoted.

The flame retardant aid may be surface treated with an epoxy compound, a silane compound, an isocyanate compound or a titanate compound as required. The amount of the flame-retardant aid is 50 % by weight or less, preferably 2.0 to 15.0 % by weight. When no flame-retardant aid is added, it is required to incorporate the flame retardant in a large amount. It is preferable therefore that the flame-retardant aid is added in an amount of 20 to 70 % by weight on the basis of the flame retardant. When the amount of the flame-retardant aid exceeds 15.0 % by weight, undesirably, the flame-retardant aid promotes the decomposition of the resin and incorporated components and sometimes decreases the strength of a molded article.

The composition of the present invention can be prepared by a known apparatus and a known method which are generally used in a method for preparing a conventional resin composition. For example, it can be prepared by any one of (1) a method in which the components are mixed, the mixture is kneaded and extruded to prepare pellets and then the pellets are molded, (2) a method in which pellets having one composition and pellets having another composition are prepared first, these are mixed in predetermined amounts and the mixture is molded to obtain a molded article having an intended composition, and (3) a method in which one or two or more of the components is(are) directly charged into a molding machine. Further, for homogeneously mixing components, it is preferred to employ a method in which part of resin components are milled to fine powders and mixed with remaining components.

The flame-retardant polyester resin composition of the present invention is processed into various molded articles which are required to have flame retardancy, while it has remarkably great effects when used for electric and electronic parts such as a switch and a relay which have electric contacts formed of a metal.

EXAMPLES

The present invention will be further explained hereinafter with reference to Examples. The methods for measuring main properties are as follows.

(1) Amount of generated volatiles

A molded article having a thickness of 1/80 inch is prepared by molding at a cylinder temperature of 290° C at a mold temperature of 80° C, pulverized and placed in a vial bottle, and the bottle is sealed. Then, the bottle is heated at 150° C for 1 hour, and gas generated in the bottle is qualitatively and quantitatively analyzed, using a gas chromatography. A total peak area and the concentration of tetrahydrofuran derived from polyester are measured.

(2) Br value

5.0 Grams of pellets are placed in a vial bottle (20 ml) heated to 200° C in a gear aging testing machine, and the bottle is heated at 300° C for 1 hour and allowed to stand at room temperature for 1 hour. Then, 5 ml of ion-exchanged water is added, the mixture is stirred for 10 minutes, and this extract water is subjected to ion chromatography to determine the amount of Br.

(3) Flow length

This evaluation is for evaluating flowability in a high-shear region in particular, and a FANUC AS-MATE (clamping force: 15 ton) is used as a molding machine. The injection conditions are as follows.

Injection pressure: 200 $kg/cm^2$
Injection rate: 100 mm/second
Dwell pressure application: 0 $kg/cm^2$
Injection time: 5 seconds
Cooling time: 5 seconds
Cylinder temperature: 265° C
Mold temperature: 60° C

Fig. 1 shows schematic views of a molded article obtained.

Fig. 1(a) is a plan view, and Fig. 1(b) is a side view.

In Fig. 1, 1 indicates a gate portion which is 10 mm in width and 3 mm each in length and height. The distance between the center of one hole 2 and the center of another hole 2 which are adjacent to each other in vertical and vertical directions is 4 mm, and a molded article portion 3 has a thickness of 0.5 mm.

For flow length, the molded article is measured for a length of a portion having a molded article thickness of 0.5 mm.

(4) Flame-retardant test (UL-94)

Five test pieces (thickness: 1/80 inch) were subjected to a combustion test according to the method of Subject 94 (UL-94) by Underwriters Laboratories.

(5) Impact strength

Measured according to ASTM D-256

(6) Tensile strength

Measured according to ASTM D-638

(7) Rigidity at high temperatures

du Pont DMA983

A flexure storage modulus is measured in a resonant frequency mode at 2 - 85 Hz amplitude (p - p) = 0.02 mm at a temperature elevation rate of 2° C/minute in the range of from 30 to 210° C. A test piece for an impact piece of ASTM standard is used as a sample.

(8) Molding cycle

In this evaluation, a molded article having a large size and a large thickness is used. A minimum cooling time for obtaining a molded article which is free of a mark of a protruded pin and almost free from shrinkage distortion caused by crystallization deficiency and hence has an excellent appearance is used as an index.

A molding machine M100 supplied by K.K. Meiki Seisakusho is used.

Form of a molded article for evaluation: A box-shaped article having a cylindrical protrusion of which the diameter is 78 mm and the height is 40 mm, and having a size of 125 mm x 195 mm x 40 mm and an average wall thickness of 3 mm.

The injection conditions are as follows.

Injection pressure: 800 $kg/cm^2$

Injection rate: 50 mm/second

Dwell pressure application: 600 $kg/cm^2$

Injection time: 12 seconds

Cylinder temperature: 265° C

Mold temperature: 80° C

Examples 1 - 8 and Comparative Examples 1 - 6

Various components shown in Table 1 were added and mixed to/with polybutylene terephthalate (PBT), and a composition in the form of pellets was prepared with an extruder.

The above pellets and various test pieces obtained by injection molding of the above pellets were evaluated as described above.

Table 1 shows the results.

For comparison, a composition from which the phenylphosphonic acid (c) component was removed; a composition containing, as component (c), a phosphorus-containing compound (trimethylol phosphate (TMP) which does not come under the requirement of the present invention); and a composition containing, as component (b), a flame retardant (brominated polycarbonate Mw = $1 \times 10^4$ which does not come under the requirement of the present invention) were tested, and evaluated, in the same manner as in Examples. Table 1 also shows the results.

Table 1

| | Unit | Ex.1 | Ex.2 | Ex.3 | Ex.4 | Ex.5 |
|---|---|---|---|---|---|---|
| (a) PBT | wt.% | 79.6 | 77.6 | 77.2 | 75.6 | 73.6 |
| (b) Halogenated acrylic resin 1) | " | 14.0 | 14.0 | 14.0 | 14.0 | 14.0 |
| Halogenated acrylic resin 2) | " | - | - | - | - | - |
| Brominated polycarbonate | " | - | - | - | - | - |
| Antimony trioxide | " | 6.0 | 6.0 | 6.0 | - | - |
| Sodium antimony pentaoxide | " | - | - | - | 10.0 | 10.0 |
| (c) Phenylphosphonic acid | " | 0.1 | 0.1 | 0.5 | 0.1 | 0.1 |
| (d) Polytetra-fluoroethylene | " | 0.3 | 0.3 | 0.3 | 0.3 | 0.3 |
| (e) Ethylene-ethyl acrylate | " | - | 2.0 | 2.0 | - | 2.0 |
| (f) Inorganic filler | " | - | - | - | - | - |
| UL-94 | - | V-0 | V-0 | V-0 | V-0 | V-0 |
| Volatile gas data Total peak area | (/10g) | 34,231 | 32,845 | 28,857 | 27,351 | 25,018 |
| THF | ppm | 41 | 39 | 33 | 32 | 30 |
| Br value | ppm | 1,139 | 1,125 | 1,062 | 149 | 163 |
| Minimum cooling time | sec. | 32 | 35 | 34 | 29 | 31 |
| Flexure storage modulus at 150°C | MPa | 0.40 | 0.38 | 0.38 | 0.42 | 0.43 |
| Flow length | mm | 78 | 85 | 89 | 84 | 86 |
| Impact strength (notched) | J/m | 23 | 25 | 24 | 21 | 23 |
| Tensile strength | MPa | 50 | 52 | 53 | 49 | 55 |
| Tensile elongation | % | 3.5 | 3.6 | 3.8 | 3.4 | 3.8 |

1) $\bar{M}w = 1 \times 10^4$, 2) $\bar{M}w = 2 \times 10^4$

Table 1 (continued)

| | Unit | Ex.6 | Ex.7 | CEx.1 | CEx.2 | CEx.3 |
|---|---|---|---|---|---|---|
| (a) PBT | wt.% | 75.6 | 73.6 | 79.7 | 76.2 | 77.4 |
| (b)Halogenated acrylic resin 1) | " | - | - | 14.0 | 14.0 | 14.0 |
| Halogenated acrylic resin 2) | " | 14.0 | 14.0 | - | - | - |
| Brominated polycarbonate | " | - | - | - | - | - |
| Antimony trioxide | " | - | - | 6.0 | 6.0 | 6.0 |
| Sodium antimony pentaoxide | " | 10.0 | 10.0 | - | - | - |
| (c)Phenylphosphonic acid | " | 0.1 | 0.1 | - | 1.5 | TMP0.3 |
| (d) Polytetra-fluoroethylene | " | 0.3 | 0.3 | 0.3 | 0.3 | 0.3 |
| (e) Ethylene-ethyl acrylate | " | - | 2.0 | - | 2.0 | 2.0 |
| (f)Inorganic filler | " | - | - | - | - | - |
| L-94 | - | V-0 | V-0 | V-0 | V-0 | V-0 |
| Volatile gas data Total peak area | (/10g) | 28,103 | 24,139 | 69,435 | 73,281 | 58,426 |
| THF | ppm | 34 | 31 | 81 | 89 | 68 |
| Br value | ppm | 148 | 120 | 1,970 | 2,374 | 2,142 |
| Minimum cooling time | sec. | 30 | 33 | 38 | 39 | 37 |
| Flexure storage modulus at 150°C | MPa | 0.49 | 0.46 | 0.40 | 0.37 | 0.36 |
| Flow length | mm | 74 | 78 | 65 | 93 | 75 |
| Impact strength (notched) | J/m | 26 | 28 | 22 | 16 | 18 |
| Tensile strength | MPa | 55 | 60 | 42 | 33 | 36 |
| Tensile elongation | % | 3.7 | 3.9 | 3.3 | 2.9 | 3.0 |

1) $\bar{M}w = 1 \times 10^4$, 2) $\bar{M}w = 2 \times 10^4$

Table 1 (continued)

| | Unit | Ex.4 | Ex.5 | CEx.6 | Ex.8 |
|---|---|---|---|---|---|
| (a) PBT | wt.% | 73.9 | 71.6 | 69.6 | 79.6 |
| (b) Halogenated arylic resin 1) | " | 14.0 | - | - | 14.0 |
| Halogenated acrylic resin 2) | " | - | - | - | - |
| Brominated polycarbonate | " | - | 18.0 | 18.0 | - |
| Antimony trioxide | " | - | - | - | 6.0 |
| Sodium antimony pentaoxide | " | 10.0 | 10.0 | 10.0 | - |
| (c)Phenylphosphonic acid | " | 0.1 | 0.1 | 0.1 | 3)0.1 |
| (d) Polytetra-fluoroethylene | " | - | 0.3 | 0.3 | 0.3 |
| (e) Ethylene-ethyl acrylate | " | 2.0 | - | 2.0 | - |
| (f) Inorganic filler | " | - | - | - | - |
| UL-94 | - | V-2 | V-0 | V-0 | V-0 |
| Volatile gas data | | | | | |
| Total peak area | (/10g) | 30,193 | 89,812 | 70,162 | 35,465 |
| THF | ppm | 35 | 95 | 84 | 43 |
| Br value | ppm | 157 | 1,358 | 1,221 | 1,205 |
| Minimum cooling time | sec. | 30 | 35 | 36 | 33 |
| Flexure storage modulus at 150°C | MPa | 0.39 | 0.45 | 0.43 | 0.41 |
| Flow length | mm | 88 | 50 | 49 | 79 |
| Impact strength (notched) | J/m | 20 | 12 | 16 | 24 |
| Tensile strength | MPa | 42 | 29 | 35 | 49 |
| Tensile elongation | % | 3.1 | 2.3 | 3.0 | 3.5 |

1) $\bar{M}w = 1 \times 10^4$, 2) $\bar{M}w = 2 \times 10^4$, 3) methyl phenylphosphonate

Examples 9 - 14 and Comparative Examples 7 - 10

Various components including a glass fiber, shown in Table 2, were added to, and mixed with, polybutylene terephthalate (PBT), and a composition in the form of pellets was prepared with an extruder.

The above pellets and various test pieces obtained by injection molding of the above pellets were evaluated as described above.

Table 2 shows the results.

For comparison, pellets and test pieces were prepared from components shown in Table 2, and tested, in the same manner as above. Table 2 also shows the results.

Table 2

| | Unit | Ex.9 | Ex.10 | Ex.11 | Ex.12 | Ex.13 |
|---|---|---|---|---|---|---|
| (a) PBT | wt.% | 55.1 | 53.1 | 51.6 | 53.4 | 51.6 |
| (b) Halogenated acrylic resin 1) | " | 11.0 | 11.0 | 11.0 | 11.0 | - |
| Halogenated acrylic resin 2) | " | - | - | - | - | 11.0 |
| Brominated polycarbonate | " | - | - | - | - | - |
| Antimony trioxide | " | 3.5 | 3.5 | - | - | - |
| Sodium antimony pentaoxide | " | - | - | 5.0 | 5.0 | 5.0 |
| (c) Phenylphosphonic acid | " | 0.1 | 0.1 | 0.1 | 0.3 | 0.1 |
| (d) Polytetrafluoroethylene | " | 0.3 | 0.3 | 0.3 | 0.3 | 0.3 |
| (e) Ethylene-ethyl acrylate | " | - | 2.0 | 2.0 | - | 2.0 |
| (f) Inorganic filler | " | 30.0 | 30.0 | 30.0 | 30.0 | 30.0 |
| UL-94 | - | V-0 | V-0 | V-0 | V-0 | V-0 |
| Volatile gas data Total peak area | (/10g) | 22,523 | 21,344 | 18,047 | 18,385 | 15,654 |
| THF | ppm | 29 | 26 | 22 | 23 | 19 |
| Br value | ppm | 901 | 869 | 80 | 75 | 118 |
| Minimum cooling time | sec. | 12 | 14 | 13 | 11 | 10 |
| Flexure storage modulus at 150°C | MPa | 4.3 | 4.1 | 4.2 | 4.5 | 4.8 |
| Flow length | mm | 52 | 57 | 59 | 53 | 50 |
| Impact strength (notched) | J/m | 68 | 75 | 74 | 72 | 78 |
| Tensile strength | MPa | 136 | 132 | 130 | 135 | 146 |
| Tensile elongation | % | 4.8 | 5.1 | 5.2 | 4.7 | 5.5 |

1) $\bar{M}w = 1 \times 10^4$, 2) $\bar{M}w = 2 \times 10^4$

Table 2 (continued)

| | Unit | Ex.14 | CEx.7 | CEx.8 | CEx.9 | CEx.10 |
|---|---|---|---|---|---|---|
| (a) PBT | wt.% | 53.6 | 55.4 | 54.0 | 52.5 | 48.6 |
| (b) Halogenated acrylic resin 1) | " | - | 11.0 | 11.0 | 11.0 | - |
| Halogenated acrylic resin 2) | " | 11.0 | - | - | - | - |
| Brominated polycarbonate | " | - | - | - | - | 14.0 |
| Antimony trioxide | " | - | 3.5 | - | - | - |
| Sodium antimony pentaoxide | " | 5.0 | - | 5.0 | 5.0 | 5.0 |
| (c) Phenylphosphonic acid | " | 0.1 | 0.1 | - | 0.3 | 0.1 |
| (d) Polytetra-fluoroethylene | " | 0.3 | - | - | 0.3 | 0.3 |
| (e) Ethylene-ethyl acrylate | " | - | - | - | - | 2.0 |
| (f) Inorganic filler | " | 30.0 | 30.0 | 30.0 | 30.0 | 30.0 |
| UL-94 | - | V-0 | V-2 | V-2 | V-0 | V-0 |
| Volatile gas data Total peak area | (/10g) | 17,352 | 25,087 | 47,830 | 64,920 | 82,518 |
| THF | ppm | 20 | 30 | 45 | 56 | 75 |
| Br value | ppm | 95 | 1,452 | 367 | 508 | 820 |
| Minimum cooling time | sec. | 9 | 12 | 15 | 18 | 15 |
| Flexure storage modulus at 150°C | MPa | 4.6 | 4.1 | 4.0 | 3.9 | 3.0 |
| Flow length | mm | 48 | 54 | 53 | 60 | 41 |
| Impact strength (notched) | J/m | 73 | 63 | 65 | 55 | 40 |
| Tensile strength | MPa | 148 | 131 | 129 | 119 | 109 |
| Tensile elongation | % | 5.6 | 4.6 | 4.3 | 3.9 | 3.6 |

1) $\bar{M}w = 1 \times 10^4$, 2) $\bar{M}w = 2 \times 10^4$

## Claims

1. A flame-retardant polyester resin composition comprising
   (a) a polybutylene terephthalate or a copolyester containing at least 60 % by weight of butylene terephthalate unit,

(b) a halobenzyl acrylic resin which is a polymer of a halobenzyl (meth)acrylate of the formula (1),

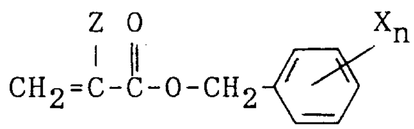

(1)

wherein X is a halogen atom, n is an integer of 1 to 5 and Z is a hydrogen atom or a methyl group,
and
(c) at least one compound selected from the group consisting of phosphonic acid and phosphonic acid monoester,

the flame-retardant polyester resin composition containing, on the basis of a total weight of the above components (a), (b) and (c), 2 to 25 % by weight of the component (b) and not more than 1 % by weight of the component (c).

**2.** The composition of claim 1, wherein in addition to the components (a), (b) and (c), the composition further contains (d) a polytetrafluoroethylene resin in an amount of 0.01 to 5 % by weight on the basis of a total amount of the components (a), (b), (c) and (d).

**3.** The composition of claim 1, wherein in addition to the components (a), (b) and (c), the composition further contains at least one (e) ethylene copolymer in an amount of 0.1 to 10 % by weight on the basis of a total weight of the components (a), (b), (c) and (e), the ethylene copolymer being selected from the group consisting of an ethylene-vinyl acetate copolymer, an ethylene-methyl methacrylate copolymer, an ethylene-ethyl acrylate copolymer, an ethylene-methyl acrylate copolymer, an ethylene-methyl acrylate-maleic anhydride terpolymer, an ethylene-acrylic acid copolymer, an ethylene-methacrylic acid copolymer, ionomer (product obtained by crosslinking an ethylene-methacrylic acid copolymer with metal ion) and a polyolefin-maleic anhydride graft copolymer.

**4.** The composition of claim 1, wherein in addition to the components (a), (b), (c) and (d), the composition further contains at least one (e) ethylene copolymer in an amount of 0.1 to 10 % by weight on the basis of a total weight of the components (a), (b), (c), (d) and (e), the ethylene copolymer being selected from the group consisting of an ethylene-vinyl acetate copolymer, an ethylene-methyl methacrylate copolymer, an ethylene-ethyl acrylate copolymer, an ethylene-methyl acrylate copolymer, an ethylene-methyl acrylate-maleic anhydride terpolymer, an ethylene-acrylic acid copolymer, an ethylene-methacrylic acid copolymer, ionomer (product obtained by crosslinking an ethylene-methacrylic acid copolymer with metal ion) and a polyolefin-maleic anhydride graft copolymer.

**5.** A flame-retardant polyester resin composition comprising
(a) a polybutylene terephthalate or a copolyester containing at least 60 % by weight of butylene terephthalate unit,
(b) a halobenzyl acrylic resin which is a polymer of a halobenzyl (meth)acrylate of the formula (1),

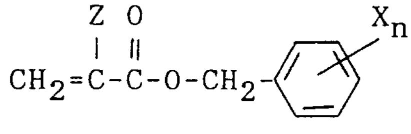

(1)

wherein X is a halogen atom, n is an integer of 1 to 5 and Z is a hydrogen atom or a methyl group,
(c) at least one compound selected from the group consisting of phosphonic acid and phosphonic acid monoester,
and
(f) an inorganic filler,

the flame-retardant polyester resin composition containing, on the basis of a total weight of the above components (a), (b), (c) and (f), 2 to 25 % by weight of the component (b), not more than 1 %

by weight of the component (c) and not more than 50 % by weight of the component (f).

**6.** The composition of claim 5, wherein in addition to the components (a), (b), (c) and (f), the composition further contains (d) a polytetrafluoroethylene resin in an amount of 0.01 to 5 % by weight on the basis of a total amount of the components (a), (b), (c), (f) and (d).

**7.** The composition of claim 5, wherein in addition to the components (a), (b), (c) and (f), the composition further contains at least one (e) ethylene copolymer in an amount of 0.1 to 10 % by weight on the basis of a total weight of the components (a), (b), (c), (f) and (e), the ethylene copolymer being selected from the group consisting of an ethylene-vinyl acetate copolymer, an ethylene-methyl methacrylate copolymer, an ethylene-ethyl acrylate copolymer, an ethylene-methyl acrylate copolymer, an ethylene-methyl acrylate-maleic anhydride terpolymer, an ethylene-acrylic acid copolymer, an ethylene-methacrylic acid copolymer, ionomer (product obtained by crosslinking an ethylene-methacrylic acid copolymer with metal ion) and a polyolefin-maleic anhydride graft copolymer.

**8.** The composition of claim 5, wherein in addition to the components (a), (b), (c), (f) and (d), the composition further contains at least one (e) ethylene copolymer in an amount of 0.1 to 10 % by weight on the basis of a total weight of the components (a), (b), (c), (f), (d) and (e), the ethylene copolymer being selected from the group consisting of an ethylene-vinyl acetate copolymer, an ethylene-methyl methacrylate copolymer, an ethylene-ethyl acrylate copolymer, an ethylene-methyl acrylate copolymer, an ethylene-methyl acrylate-maleic anhydride terpolymer, an ethylene-acrylic acid copolymer, an ethylene-methacrylic acid copolymer, ionomer (product obtained by crosslinking an ethylene-methacrylic acid copolymer with metal ion) and a polyolefin-maleic anhydride graft copolymer.

FIG. 1 (a)

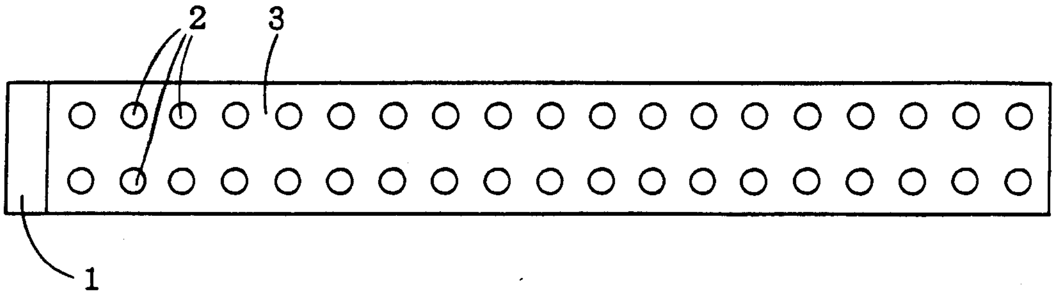


FIG. 1 (b)

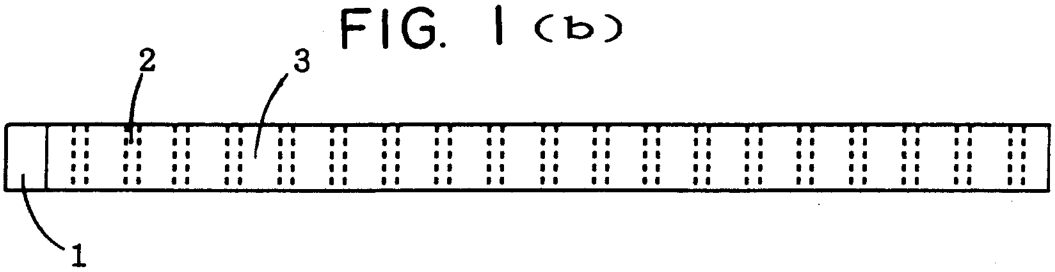

# INTERNATIONAL SEARCH REPORT

International application No.
PCT/JP93/01635

**A. CLASSIFICATION OF SUBJECT MATTER**

Int. $Cl^5$ C08L67/02, C08K5/5317, 5/5333

According to International Patent Classification (IPC) or to both national classification and IPC

**B. FIELDS SEARCHED**

Minimum documentation searched (classification system followed by classification symbols)

Int. $Cl^5$ C08L67/02, C08K5/5317, 5/5333

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, A, 59-6248 (Mitsubishi Kosei Corp.), January 13, 1984 (13. 01. 84), Line 5, lower left column to line 8, lower right column, page 1 | 1-8 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| January 24, 1994 (24. 01. 94) | February 8, 1994 (08. 02. 94) |

| Name and mailing address of the ISA/ | Authorized officer |
|---|---|
| Japanese Patent Office | |
| Facsimile No. | Telephone No. |